# FASCICULE DE BREVET EUROPEEN

(11) **EP 3 177 831 B1**
(45) Date de publication et mention de la délivrance du brevet: **11.07.2018**
(21) Numéro de dépôt: 16727766.4
(22) Date de dépôt: 13.05.2016
(51) Int. Cl.: F03G 3/00, F03G 7/00, F03G 7/08, F04B 9/04, F16H 57/12, F02D 11/10, F16H 47/02

(54) **MECANISME EQUILIBRE POUR ECONOMIE D'ENERGIE, MACHINE TOURNANTE ET PROCEDE DE MISE EN OEUVRE**
AUSGEGLICHENER MECHANISMUS ZUR ENERGIEEINSPARUNG, ROTATIONSMASCHINE UND VERFAHREN ZUR IMPLEMENTIERUNG SOLCH EINES MECHANISMUS
BALANCED MECHANISM FOR SAVING ENERGY, ROTATING MACHINE AND METHOD IMPLEMENTING SUCH A MECHANISM

(30) Priorité: 30.12.2015 WO PCT/FR2015/053769; 27.01.2016 WO PCT/FR2016/050166
(43) Date de publication de la demande: 14.06.2017
(73) Titulaire: Granger, Maurice, Albufeira 8200-385 (PT)
(72) Inventeur: Granger, Maurice, Albufeira 8200-385 (PT)
(74) Mandataire: Cabinet Laurent & Charras
(86) Numéro de dépôt international: PCT/FR2016/051132
(87) Numéro de publication internationale: WO 2017/064379

(56) Documents cités:
- WO-A1-2008/037014
- RU-C1- 2 354 873
- US-A- 5 890 400
- US-A1- 2006 220 385

## Description

La présente invention concerne un mécanisme équilibré pour économie d'énergie, dans toute application envisageable, et notamment les machines tournantes.

L'invention concerne également une machine tournante, par exemple un moteur, un générateur ou un mélangeur, comprenant au moins un tel mécanisme. L'invention concerne en particulier un moteur comprenant plusieurs mécanismes.

L'invention concerne enfin un procédé de mise en oeuvre d'un tel mécanisme.

Dans le domaine mécanique, il existe de nombreux mécanismes de transmission mouvement (cf. EP 2 781 790 A1), tels que des trains épicycloïdaux ou des vilebrequins, adaptés pour équiper des machines tournantes. Toutefois, les rendements obtenus avec les mécanismes connus ne sont pas entièrement satisfaisants.

Le but de la présente invention est de proposer un mécanisme permettant d'économiser de l'énergie et améliorer le rendement d'une machine tournante.

A cet effet, l'invention a pour objet un mécanisme, comprenant : un support incluant un socle, un balancier suspendu au socle, et des bielles de suspension articulées sur le socle et sur le balancier; une première roue dentée mobile en rotation par rapport au support autour d'un premier axe ; une seconde roue dentée mobile en rotation par rapport au support autour d'un second axe ; un premier élément excentrique solidaire en rotation de la première roue dentée et générant un premier moment de force de pesanteur autour du premier axe ; un second élément excentrique solidaire en rotation de la seconde roue dentée et générant un second moment de force de pesanteur autour du second axe ; et une bielle de liaison comportant une tête rotative montée en liaison pivot sur un premier arbre et une tête excentrique montée en liaison pivot excentrique sur un second arbre.

Selon l'invention, les axes sont parallèles dans un plan de référence horizontal ou vertical. Le balancier supporte les axes des roues dentées et des éléments excentriques. Les bielles de suspension sont inclinées selon un angle compris entre 45 degrés et 80 degrés par rapport à un plan vertical. Pour la bielle de liaison, le premier arbre est soit un arbre supportant l'une des roues dentées, soit un arbre fixé au socle, tandis que le second arbre est l'autre arbre parmi l'arbre supportant l'une des roues dentées et l'arbre fixé au socle. Les roues dentées engrènent l'une avec l'autre avec un rapport de transmission unitaire et sont mobiles en rotation dans des sens contraires. Lorsque le mécanisme est en fonctionnement, les éléments excentriques décrivent un mouvement elliptique, tandis que le balancier décrit un mouvement de débattement ayant une composante verticale et une composante horizontale. Les moments de force de pesanteur des éléments excentriques ont une même valeur et un même sens, variables selon leur position angulaire autour des axes. Pour chaque position angulaire des roues dentées et des éléments excentriques autour des axes, le mécanisme présente une configuration d'équilibre au repos.

Ainsi, l'invention permet de générer de l'énergie, grâce aux forces de centrifugation résultant des mouvements des éléments excentriques et aux forces de poussée ou traction résultant des mouvements du balancier.

L'équilibrage des éléments excentriques et les forces centrifuges qu'ils génèrent permet de réduire l'énergie nécessaire pour entraîner les roues dentées et les éléments excentriques en rotation. Plus les forces centrifuges augmentent, plus cette rotation est facilitée.

L'inclinaison des bielles de suspension permet de modifier le centre de gravité du mécanisme, en comparaison avec des bielles qui seraient disposées verticalement à l'équilibre. L'énergie de poussée ou de traction du balancier est très supérieure à la force initiale d'entraînement en rotation des éléments excentriques. Une fois le mécanisme en mouvement, l'énergie centrifuge générée par les éléments excentriques est très supérieure à l'énergie de poussée ou traction du balancier.

Selon d'autres caractéristiques avantageuses du mécanisme selon l'invention, prises isolément ou en combinaison :
- Les éléments excentriques ont une même masse et des mêmes dimensions.
- Les roues dentées comprennent une première roue ayant une dent plus longue que les autres dents et une deuxième roue ayant une rainure formée entre deux dents, et la dent plus longue et la rainure coïncident lors de l'engrènement des roues dentées, pour permettre l'alignement des éléments excentriques.
- Le mécanisme comprend un arbre de transmission ayant un axe aligné avec les articulations supérieures des bielles de suspension.
- On définit une première distance entre l'extrémité distale de chaque élément excentrique et l'axe de rotation correspondant. On définit une deuxième distance égale à l'entraxe des bielles de suspension. La première distance est inférieure à la deuxième distance, de sorte que les éléments excentriques passent sous l'arbre de transmission.
- Le mécanisme comprend des moyens de démarrage, incluant par exemple une chaine ou un système d'engrenages, conçus pour entrainer en rotation l'une des roues dentées.
- Les moyens de démarrage comprennent un moteur.
- Les moyens de démarrage comprennent une manivelle.
- Le mécanisme est dépourvu de moyens de démarrage dédiés du ou des mécanismes. Dans ce cas, le démarrage du ou des mécanismes peut être réalisé par simple poussée sur le ou les balanciers ou sur l'un des éléments excentriques.
- Le mécanisme comprend des moyens de récupération d'énergie en fonctionnement, par exemple sous forme d'une génératrice ou d'un moteur-générateur.
- Lorsque les des moyens de récupération d'énergie comprennent une génératrice, la machine comprend de préférence des moyens de démarrage du mécanisme, incluant un moteur ou une manivelle. Cela permet de vaincre la résistance au démarrage lié à la présence de la génératrice.
- Pour fixer la bielle de liaison, le premier arbre supporte l'une des roues dentées, tandis que le second arbre est fixé au socle.
- Pour fixer la bielle de liaison, le premier arbre est fixé au socle, tandis que le second arbre supporte l'une des roues dentées.
- Les axes des roues dentées sont horizontaux.
- Le plan de référence est horizontal.
- Le plan de référence est vertical.

L'invention concerne également une machine tournante, comprenant au moins un mécanisme tel que mentionné ci-dessus.

De préférence, la machine tournante est une machine à production ou transformation d'énergie, présentant un rendement amélioré. Avantageusement, cette machine est dépourvue de vilebrequin.

A titre d'exemples non limitatifs, la machine tournante peut être un moteur, un générateur, un mélangeur, une centrifugeuse, un compresseur, une pompe ou une turbine.

Lorsque la machine est un moteur à combustion interne, les éléments excentriques équipant le mécanisme se rencontrent en deux positions de centrifugation maximale, correspondant chacune à une combustion de gaz dans le moteur.

Selon un mode de réalisation avantageux, la machine comprend au moins une paire de mécanismes disposés en série et synchronisés. Les mécanismes sont alignés et mobiles en opposition de phase.

Chaque mécanisme comprend son propre arbre de transmission, ayant un axe aligné avec les articulations supérieures des bielles de suspension.

Selon un autre mode de réalisation avantageux, la machine comprend plusieurs paires de mécanismes, disposés en série et synchronisés au sein de chaque paire. Les paires sont disposées en parallèle et synchronisées entre elles.

La machine comprend deux arbres de transmission, chacun couplé aux différents mécanismes disposés en parallèle selon une rangée.

Avantageusement, la machine comprend un unique arbre de récupération d'énergie.

Selon un autre mode de réalisation avantageux, la machine est un moteur à deux temps comprenant deux mécanismes. Les deux premiers éléments excentriques sont disposés en décalage d'un demi-tour, et les deux seconds éléments excentriques sont disposés en décalage d'un demi-tour.

Selon un autre mode de réalisation avantageux, la machine est un moteur à quatre temps comprenant quatre mécanismes. Les quatre premiers éléments excentriques sont disposés en décalage par quarts de tour, et de même les quatre seconds éléments excentriques sont disposés en décalage par quarts de tour.

De préférence, lorsque la machine comprend plusieurs mécanismes à balancier, le socle est commun à tous les balanciers. Autrement dit, tous les balanciers sont suspendus au même socle.

L'invention a également pour objet un procédé de mise en oeuvre d'un mécanisme tel que décrit ci-dessus, comprenant les étapes successives suivantes :
- une étape de positionnement des éléments excentriques l'un par rapport à l'autre et par rapport aux roues dentées, de sorte que les moments de force de pesanteur des éléments excentriques ont une même valeur et un même sens, variables selon leur position angulaire autour des axes, et que pour chaque position angulaire des roues dentées et des éléments excentriques autour des axes, le mécanisme présente une configuration d'équilibre au repos ;
- une étape de démarrage de la rotation des roues dentées et des éléments excentriques autour des axes, dans laquelle le mécanisme quitte la configuration d'équilibre et se met en mouvement ; et
- une étape de fonctionnement, dans laquelle la rotation des éléments excentriques autour des axes génère des forces centrifuges au sein du mécanisme, les éléments excentriques décrivent un mouvement elliptique, tandis que le balancier décrit un mouvement de débattement ayant une composante verticale et une composante horizontale.

L'invention sera mieux comprise à la lecture de la description qui va suivre, donnée uniquement à titre d'exemple non limitatif et faite en référence aux dessins annexés sur lesquels :
- la figure 1 est une vue de côté d'un mécanisme conforme à un premier mode de réalisation de l'invention, comprend un support à balancier, deux roues dentées, deux éléments excentriques et une bielle de liaison ;
- la figure 2 est une vue partielle de dessus, à plus grande échelle, du balancier équipant le mécanisme de la figure 1 ;
- la figure 3 est une vue de détail partielle de l'engrènement entre les deux roues dentées du mécanisme ;
- la figure 4 est une vue de côté de la bielle de liaison équipant la machine des figures 1 et 2 ;
- les figures 5 à 12 sont des représentations schématiques du mécanisme des figures 1 et 2, illustrant les mouvements des roues dentées et des éléments excentriques ;
- les figures 13 à 16 sont des représentations schématiques analogues aux figures 5 à 8, pour un mécanisme conforme à un deuxième mode de réalisation de l'invention ;
- la figure 17 est une vue de dessus montrant une variante d'accouplement de la bielle de liaison sur le mécanisme ;
- la figure 18 est une vue analogue à la figure 2, pour un mécanisme conforme à un troisième mode de réalisation de l'invention ;
- la figure 19 est une vue analogue à la figure 1, montrant un exemple de machine conforme à l'invention, équipée de deux mécanismes en série ;
- la figure 20 est une vue de dessus de la machine de la figure 1 ;
- la figure 21 est une vue analogue à la figure 18, montrant un deuxième exemple de machine conforme à l'invention ;
- la figure 22 est une vue analogue à la figure 19, montrant un troisième exemple de machine conforme à l'invention ;
- la figure 23 est une vue analogue à la figure 18, montrant un quatrième exemple de machine conforme à l'invention ; et
- la figure 24 est une vue analogue à la figure 19, montrant un cinquième exemple de machine conforme à l'invention, équipée en parallèle de deux paires de mécanismes en série.

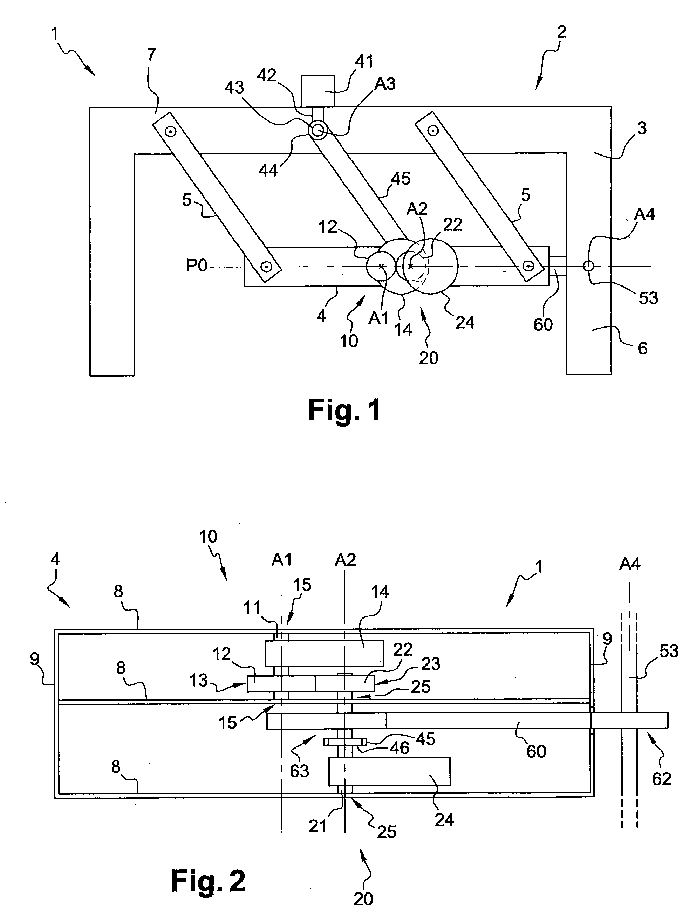

Sur les figures 1 à 12 est représenté un mécanisme 1 équilibré pour économie d'énergie, conforme à un premier mode de réalisation de l'invention.

Le mécanisme 1 comprend un support 2, un premier ensemble 10 mobile en rotation R1 autour d'un premier axe A1, un second ensemble 20 mobile en rotation R2 autour d'un second axe A2, un dispositif 40 de démarrage du mécanisme 1, un arbre support 53, et une bielle de liaison 60. Les axes A1 et A2 sont parallèles entre eux, horizontaux et disposés dans un plan de référence P0 qui est horizontal. Les ensembles 10 et 20 sont contrarotatifs.

Le support 2 comprend un socle fixe 3 et un balancier mobile 4, qui est positionné horizontalement et suspendu au socle 3 par quatre bielles 5. Chaque bielle de suspension 5 est articulée à la fois sur le socle 3 et sur le balancier 4, par des liaisons pivots d'axes parallèles aux axes A1 et A2. Le balancier 4 est mobile en translation circulaire par rapport au support 3, sur un trajet restreint de débattement. Les bielles 5 sont articulées dans les angles du balancier 4. Les bielles 5 sont inclinées selon un angle de 45 degrés par rapport à un plan vertical.

Le socle 3 comprend deux pieds verticaux 6 et un montant horizontal supérieur 7. Les bielles 5 sont articulées sur le montant 7. En alternative, le socle 3 peut comporter deux montants 7. En complément, le socle 3 peut comporter un ou plusieurs montants horizontaux inférieurs.

Le balancier 4 comprend trois plaques longitudinales 8 et des barres transversales 9 fixées aux extrémités des plaques longitudinales 8. Les bielles 5 sont articulées sur les plaques 8 extérieures. Les plaques 8 du balancier 4 supportent les ensembles 10 et 20. Plus précisément, l'ensemble 10 est supporté par la plaque 8 intermédiaire et la plaque 8 avant via les paliers 15, l'ensemble 20 est supporté par la plaque 8 intermédiaire et la plaque 8 arrière via les paliers 25. Les axes A1 et A2 sont fixes par rapport au balancier 4.

L'ensemble 10 comprend un arbre 11, une roue dentée 12 munie de dents 13, un cylindre 14 et des paliers 15. L'arbre 11, la roue 12 et les paliers 15 sont centrés sur l'axe A1, tandis que le cylindre 14 constitue un élément excentrique, ayant un centre de gravité G1 excentré d'une distance d1 par rapport à l'axe A1. La roue 12 et le cylindre 14 sont montés sur l'arbre 11, qui est supporté par les paliers 15 montés dans les plaques 8 du balancier 4. La roue 12 est mobile en rotation R1 par rapport au balancier 4 autour de l'axe A1.

Le cylindre 14 est solidaire en rotation R1 de la roue 12 et génère un moment M1 de force de pesanteur P1 autour de l'axe A1. La force P1 est sensiblement constante. Par contre, le moment M1 a une valeur et un sens (horaires ou antihoraire) qui sont variables en fonction de la position angulaire du cylindre 14 autour de l'axe A1.

L'ensemble 20 comprend un arbre 21, une roue dentée 22 munie de dents 23, un cylindre 24 et des paliers 25. L'arbre 21, la roue 22 et les paliers 25 sont centrés sur l'axe A2, tandis que le cylindre 24 constitue un élément excentrique, ayant un centre de gravité G2 excentré d'une distance d2 par rapport à l'axe A2. La roue 22 et le cylindre 24 sont montés sur l'arbre 21, qui est supporté par les paliers 25 montés dans les plaques 8 du balancier 4. La roue 22 est mobile en rotation R2 par rapport au balancier 4 autour de l'axe A2.

Le cylindre 24 est solidaire en rotation R2 de la roue 14 et génère un moment M2 de force de pesanteur P2 autour de l'axe A2. La force P2 est sensiblement constante. Par contre, le moment M2 a une valeur et un sens (horaires ou antihoraire) qui sont variables en fonction de la position angulaire du cylindre 24 autour de l'axe A2.

Les roues 12 et 22 engrènent l'une avec l'autre avec un rapport de transmission unitaire. Les roues 12 et 22 ont les mêmes dimensions et le même nombre de dents 13 et 23. Les roues 12 et 22 sont mobiles en rotation R1 et R2 dans des sens contraires. Autrement dit, les roues 12 et 22 sont contrarotatives.

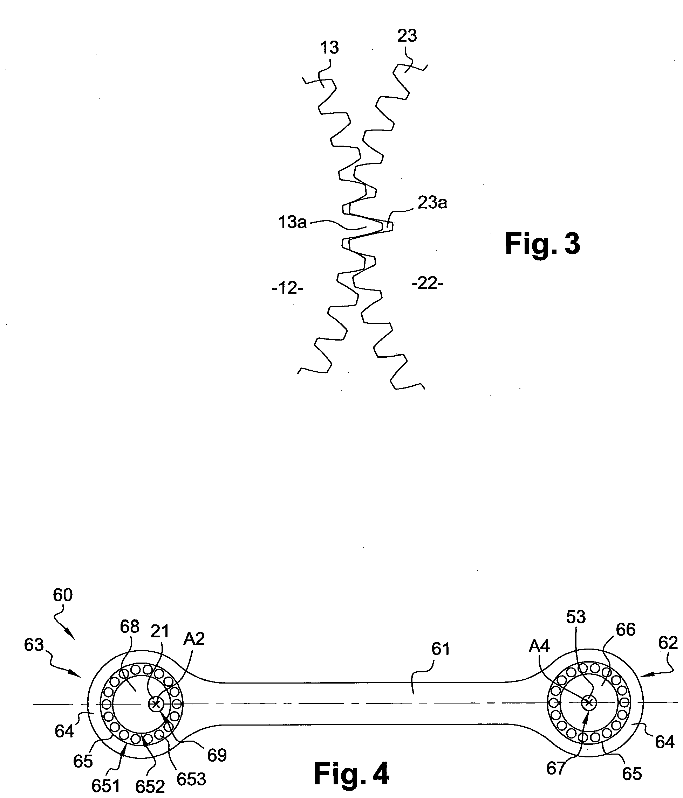

Comme montré à la figure 3, la roue 12 a une dent 13a plus longue que les autres dents 13, tandis que la roue 22 a une rainure 23a formée entre deux dents 23. La dent 13a et la rainure 23a de positionnement peuvent présenter différentes formes sans sortir du cadre de l'invention.

En pratique, la dent 13a et la rainure 23a coïncident lors de l'engrènement des roues dentées 12 et 22, ce qui permet l'alignement des cylindres 14 et 24, et donc l'équilibrage précis du mécanisme 1.

Par exemple, les roues dentées 12 et 22 et les cylindres 14 et 24 peuvent être munis de trous de fixation disposés en vis-à-vis, non représentés sur les différentes figures dans un but de simplification. Ainsi, la dent 13a et la rainure 23a facilitent l'alignement de ces trous de fixation.

Dans le cadre de l'invention, les cylindres 14 et 24 sont positionnés avec précision l'un par rapport à l'autre et par rapport aux roues 12 et 14, de sorte que les moments M1 et M2 aient toujours la même valeur et le même sens (horaire ou antihoraire), quelles que soit les positions angulaires respectives des cylindres 14 et 24 autour des axes A1 et A2.

La masse et les dimensions des cylindres 14 et 24 sont déterminées avec précision, car elles influencent la position des centres de gravité G1 et G2, et donc la valeur des moments M1 et M2. La masse de chaque cylindre 14 et 24 est proportionnelle à ses dimensions, à masse volumique constante. De préférence, les cylindres 14 et 24 ont la même masse et les mêmes dimensions. En alternative, les cylindres 14 et 24 peuvent avoir des masses et dimensions différentes, tant que les moments M1 et M2 ont la même valeur et le même sens (horaire ou antihoraire) quelles que soit leurs positions angulaires respectives.

Le dispositif 40 de démarrage du mécanisme 1 est conçu pour initier la rotation R1 et R2 des ensembles 10 et 20, depuis un état d'équilibre du mécanisme 1. Le dispositif 40 peut présenter toute configuration adaptée à l'application visée.

Sur l'exemple des figures 1 et 2, le dispositif 40 comprend un moteur 41, une courroie 42, un arbre de transmission 43, une roue dentée 44, une chaine crantée 45 et une roue dentée 46. Le moteur 41 est disposé sur le montant 7 du socle 3. L'arbre 43 est supporté à ses extrémités par le socle 3 et mobile en rotation autour d'un axe A3, qui est aligné verticalement avec les articulations supérieures des bielles 5. L'axe A3 est disposé horizontalement, parallèle aux axes A1 et A2. La courroie 42 relie le moteur 41 à l'arbre 43. La roue 44 est montée solidaire en rotation de l'arbre 43, tandis que la roue 46 est montée solidaire en rotation de l'arbre 21. En alternative, la roue 46 peut être montée solidaire en rotation de l'arbre 11. La chaine 45 relie les roues 44 et 46, dont l'entraxe est égal à l'entraxe des bielles 5. Selon une autre alternative, les roues dentées 44 et 46 ainsi que la chaine 45 peuvent être remplacées par un système de cardans, ou tout autre système de transmission de mouvement adapté à l'application visée. Ainsi, le démarrage du moteur 41 permet d'entraîner les ensembles 10 et 20 en rotation R1 et R2.

Comme montré en particulier à la figure 4, la bielle de liaison 60 comprend un corps 61 central reliant deux têtes 62 et 63 situées à ses extrémités longitudinales. La tête 62 est montée en liaison pivot sur un arbre 53 fixé au socle 3, sur l'un des pieds 6. La tête 63 est conformée en excentrique, et montée en liaison pivot excentrique sur l'arbre 21. En alternative, selon une configuration différente du mécanisme 1, la tête 63 peut être montée en liaison pivot excentrique sur l'arbre 11. La tête rotative 62 et la tête excentrique 63 comprennent chacune une partie annulaire 64 dans laquelle est logé un roulement 65. En alternative, cette partie annulaire 64 peut comporter tout type de palier adapté à l'application visée. Chaque roulement 65 comprend une bague externe 651, une bague interne 652 et une rangée de billes 653.

La tête rotative 62 comprend un manchon annulaire 66, comportant un orifice 67 de réception de l'arbre 53. Le manchon 66 est solidaire de l'arbre 53 et mobile en rotation dans le roulement 64.

La tête excentrique 63 comprend un manchon excentrique 68, comportant un orifice excentrique 69 de réception de l'arbre 21. Le manchon 68 est solidaire de l'arbre 21 et mobile en rotation dans le roulement 64.

En alternative, la bielle 60 peut être conformée différemment sans sortir du cadre de l'invention.

La bielle 60 encaisse les forces de poussée ou de traction générées par le balancier 4 au cours du fonctionnement du mécanisme 1. En outre, la bielle 60 rigidifie le mécanisme 1 et permet une importante réduction des vibrations.

En pratique, le mouvement du mécanisme 1 permet de récupérer de l'énergie au niveau de l'arbre 43, par exemple en couplant cet arbre 43 à une génératrice. En alternative, le moteur 41 peut être configuré comme un moteur-générateur, conçu pour fournir de l'énergie au démarrage du mécanisme 1, puis récupérer de l'énergie lorsque le mécanisme 1 est en fonctionnement, L'arbre 43 constitue ainsi un arbre de récupération d'énergie.

En variante non représentée, le mécanisme 1 peut être dépourvu de dispositif de moteur 41 et courroie 42 constituant des moyens de démarrage. Dans ce cas, le démarrage du mécanisme 1 peut être réalisé en exerçant une simple poussée sur un côté du balancier 4, ou sur l'un des cylindres 14 et 24. L'énergie nécessaire pour lancer le mécanisme 1 est très faible. De préférence, le mécanisme 1 comporte tout de même les éléments 43, 44, 45 et 46.

Pour permettre le fonctionnement correct du mécanisme 1, la distance entre l'extrémité distale de chaque cylindre 14 et 24 et son axe de rotation A1 ou A2 est inférieure à l'entraxe entre articulations des bielles 5, de sorte que les cylindres 14 et 24 puissent passer sous l'arbre de transmission 43.

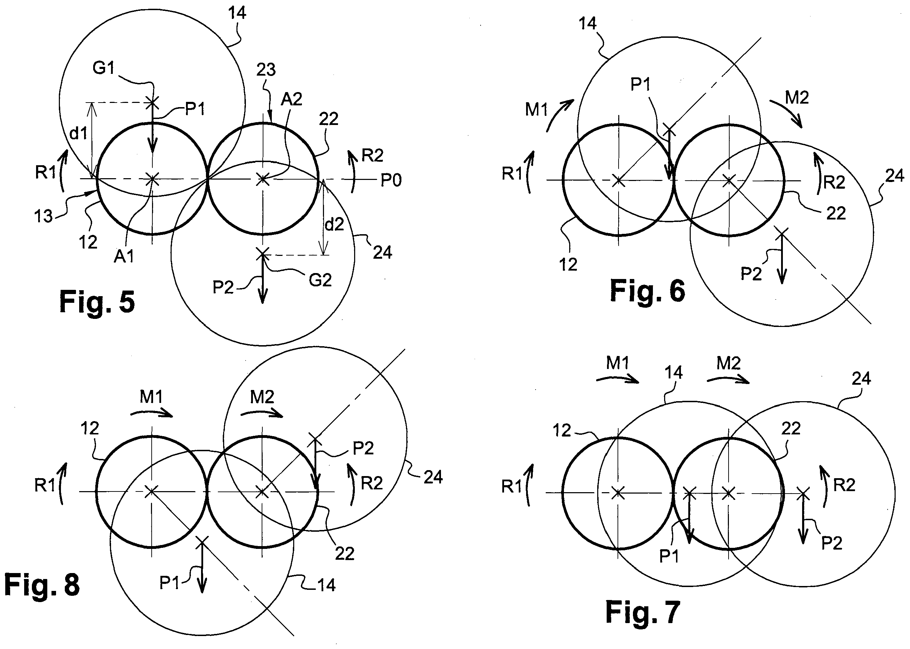

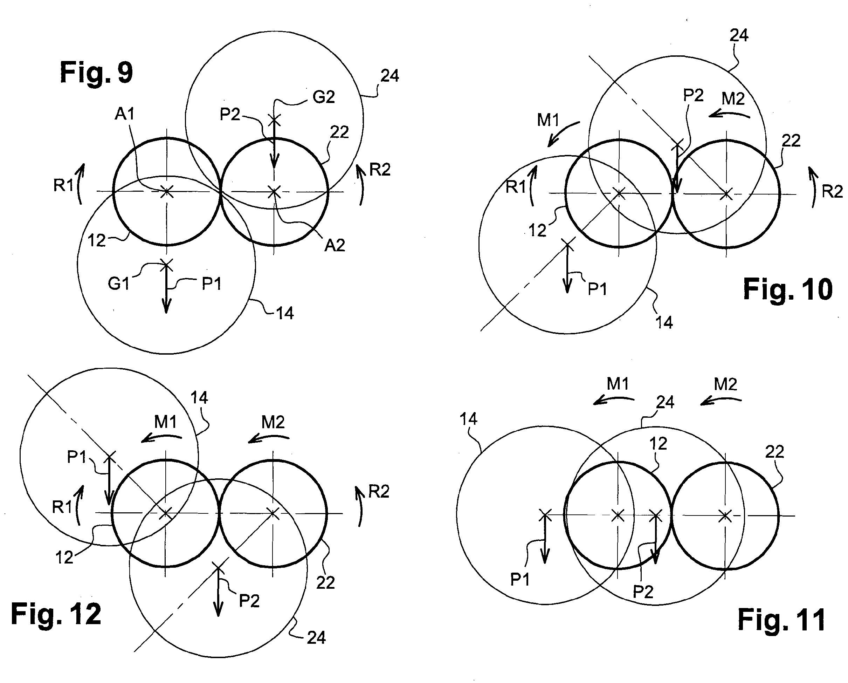

Les figures 5 à 12 illustrent le fonctionnement du mécanisme 1 sur un tour. En particulier, les figures 5 à 8 illustrent un demi-tour pendant lequel les cylindres 14 et 24 sont mobiles du côté droit du balancier 4, tandis que les figures 9 à 12 illustrent un demi-tour pendant lequel les cylindres 14 et 24 sont mobiles du côté gauche du balancier 4.

La figure 5 montre le cylindre 14 positionné vers le haut et le cylindre 24 positionné vers le bas. Le mécanisme 1 est à l'équilibre. Les roues 12 et 22 sont immobiles. Les moments M1 et M2 sont nuls.

A ce stade, le dispositif 40 permet de démarrer le mouvement du mécanisme 1, avec engrènement des roues 12 et 22, de sorte que les cylindres 14 et 24 vont être déplacés tous les deux vers la droite. Le basculement du cylindre 14 aide la roue 12 à tourner dans le sens de rotation R1, ce qui permet d'entraîner la roue 22 dans le sens de rotation R2, et ainsi de relever le cylindre 24.

La figure 6 montre les cylindres 14 et 24 ayant chacun effectué un huitième de tour du côté droit. La figure 7 montre les cylindres 14 et 24 ayant chacun effectué un quart de tour du côté droit. La figure 8 montre les cylindres 14 et 24 ayant chacun effectué trois quarts de tour du côté droit. A chaque instant, les moments M1 et M2 ont la même valeur et le même sens (horaire). Sous l'action des cylindres 14 et 24, le balancier 4 est entraîné du côté droit et vers le haut. Une force de poussée est alors transmise par la bielle 60 à l'arbre 53.

La figure 9 montre les cylindres 14 et 24 ayant chacun effectué un demi-tour par rapport à leur position initiale de la figure 5. Le cylindre 14 est positionné vers le bas, tandis que le cylindre 24 est positionné vers le haut. Les moments M1 et M2 sont nuls. Les roues 12 et 22 sont en mouvement, de sorte que les cylindres 14 et 24 vont être déplacés tous les deux vers la droite. Le basculement du cylindre 24 aide la roue 22 à tourner dans le sens de rotation R2, ce qui permet d'aider la roue 22 à tourner ans le sens de rotation R1, et ainsi relever le cylindre 14.

La figure 10 montre les cylindres 14 et 24 ayant chacun effectué un huitième de tour du côté gauche. La figure 11 montre les cylindres 14 et 24 ayant chacun effectué un quart de tour du côté gauche. La figure 12 montre les cylindres 14 et 24 ayant chacun effectué trois quarts de tour du côté gauche. A chaque instant, les moments M1 et M2 ont la même valeur et le même sens (antihoraire). Sous l'action des cylindres 14 et 24, le balancier 4 est entraîné du côté gauche et vers le bas. Une force de traction est alors transmise par la bielle 60 à l'arbre 53.

Au fur et à mesure que les ensembles 10 et 20 pivotent autour des axes A1 et A2, les cylindres 14 et 24 sont donc situés tantôt du côté droit, tantôt du côté gauche. En pratique, la rotation R1 et R2 des cylindres 14 et 24 génère des forces centrifuges au sein du mécanisme 1. Le balancier 4 se déplace tantôt du côté droit et vers le haut, tantôt du côté gauche et vers le bas, en étant suspendu au socle 3 par les bielles 5 linclinées à 45 degrés. Le balancier 4 décrit un mouvement de débattement ayant une composante verticale et une composante horizontale. Par conséquent, les cylindres 14 et 24 décrivent un mouvement elliptique au lieu d'un mouvement circulaire.

Le mécanisme 1 suit un mouvement oscillatoire en deux temps. Les forces centrifuges sont maximales lorsque les cylindres 14 et 24 se croisent, sur les figures 7 et 11. Chaque temps correspond à un demi-tour (180°) des cylindres 14 et 24, entre leurs positions de centrifugation maximale.

L'inclinaison des bielles 5 permet de modifier le centre de gravité du mécanisme 1, en comparaison avec des bielles 5 qui seraient disposées verticalement à l'équilibre. L'énergie de poussée ou de traction du balancier 4 est très supérieure à la force initiale d'entraînement en rotation des cylindres 14 et 24. Une fois le mécanisme 1 en mouvement, l'énergie centrifuge générée par les cylindres 14 et 24 est très supérieure à l'énergie de poussée ou traction du balancier 4.

Au vu des explications ci-dessus, il est remarquable que pour chaque position angulaire des roues dentées 12 et 22 et des cylindres 14 et 24 autour des axes A1 et A2, le mécanisme 1 présente une configuration d'équilibre au repos. Autrement dit, en considérant le mécanisme 1 à l'arrêt dans n'importe quelle position angulaire des ensembles 10 et 20, alors le mécanisme 1 se trouve dans une configuration de repos. Le mécanisme 1 est équilibré, ce qui réduit fortement l'énergie nécessaire pour faire tourner les ensembles 10 et 20.

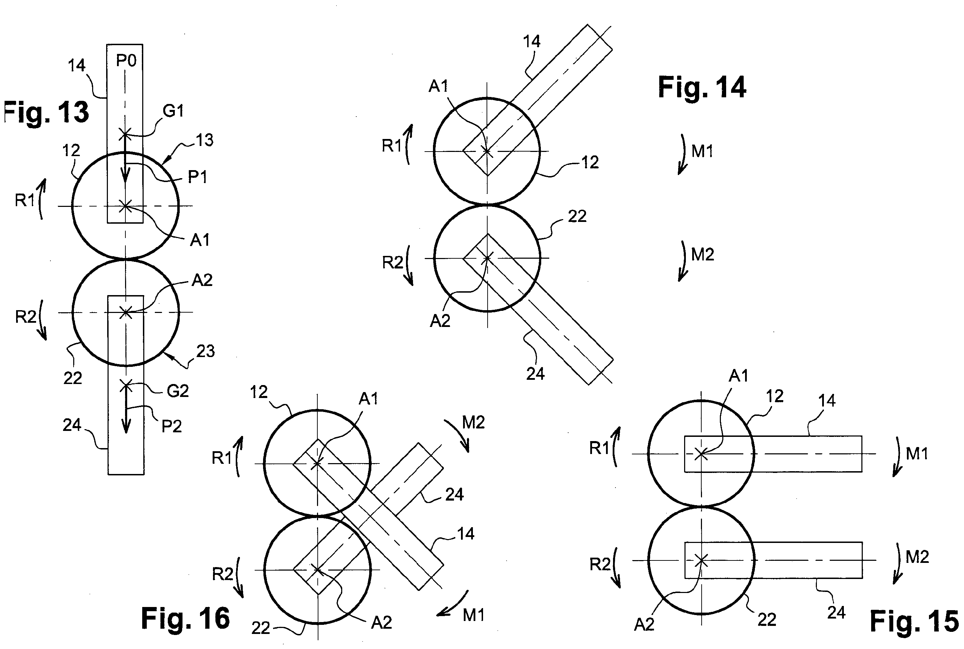

D'autres modes de réalisation de l'invention sont montrés aux figures 13 à 24. Certains éléments constitutifs du mécanisme 1 sont comparables à ceux du premier mode de réalisation décrit plus haut et, dans un but de simplification, portent les mêmes références numériques.

Les figures 13 à 16 illustrent le fonctionnement d'un mécanisme 1 conforme à un second mode de réalisation. Les axes A1 et A2 sont parallèles entre eux et horizontaux. En revanche, les axes A1 et A2 sont disposés dans un plan de référence P0 qui est vertical. Les éléments excentriques 14 et 24 sont constitués par des bras allongés et non des cylindres.

Dans ce mode de réalisation également, les bras 14 et 24 sont positionnés avec précision l'un par rapport à l'autre et par rapport aux roues 12 et 14, de sorte que les moments M1 et M2 aient toujours la même valeur et le même sens (horaire ou antihoraire), quelles que soit les positions angulaires respectives des bras 14 et 24 autour des axes A1 et A2.

Seul le positionnement des bras 14 et 24 du côté droit est illustré aux figures 13 à 16, tandis que le positionnement des bras 14 et 24 du côté gauche n'est pas illustré, dans un but de simplification.

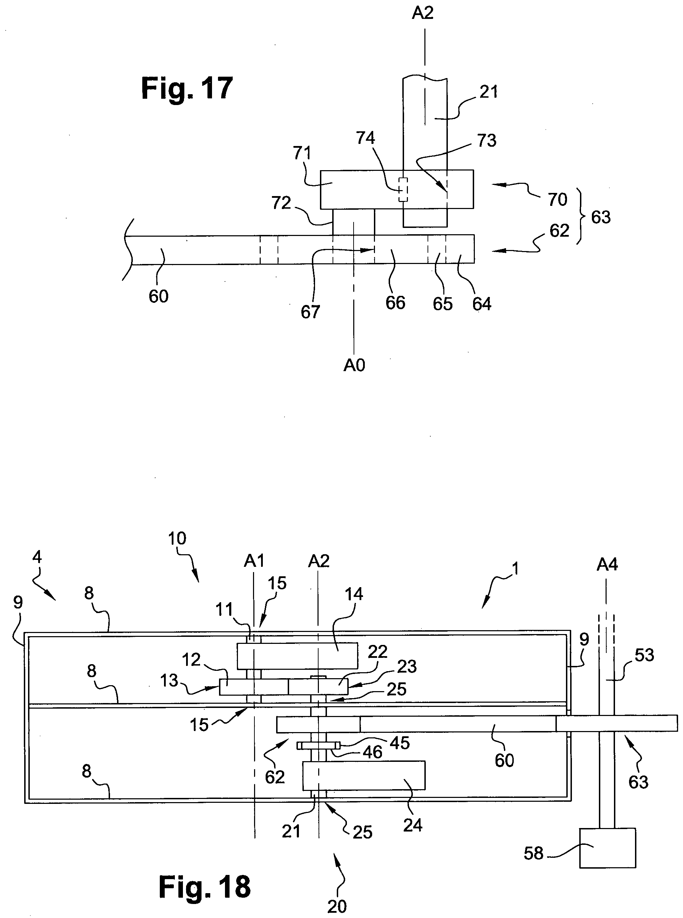

La figure 17 illustre une variante d'accouplement de la bielle de liaison 60 avec l'arbre 21. La tête excentrique 63 est constituée d'une tête rotative 62 classique et d'une pièce excentrique 70 interposée entre l'arbre 21 et la tête 62.

La pièce 70 comprend un corps 71 allongé et un maneton 72 cylindrique solidaire du corps 71. Un orifice 73 est formé dans le corps 71. L'arbre 21 est disposé dans l'orifice 73 et solidarisé au corps 71, par exemple à l'aide d'une clavette 74 ou par tout autre moyen. L'arbre 21 et l'orifice 73 sont centrés sur l'axe A2. Le maneton 72 est disposé dans l'orifice 67 du manchon 66, centré sur un axe A0. Cet axe A0 constitue l'axe de rotation de l'axe A2 au cours du mouvement du mécanisme 1.

La figure 18 illustre le fonctionnement d'un mécanisme 1 conforme à un troisième mode de réalisation.

La tête rotative 62 de la bielle 60 est montée en liaison pivot sur l'arbre 21, tandis que la tête excentrique 63 est montée en liaison pivot excentrique sur l'arbre 53 fixé au socle 3. En alternative, selon une configuration différente du mécanisme 1, la tête 62 peut être montée en liaison pivot sur l'arbre 22.

Dans ce mode de réalisation, le mouvement du mécanisme 1 permet de récupérer de l'énergie au niveau de l'arbre 53, par exemple en couplant cet arbre 53 à une génératrice 58. L'arbre 53 constitue ainsi un arbre de récupération d'énergie.

En pratique, un seul mécanisme 1 permet de constituer un moteur. Néanmoins, il est préférable de fabriquer un moteur en associant plusieurs mécanismes 1 synchronisés, comme détaillé ci-après.

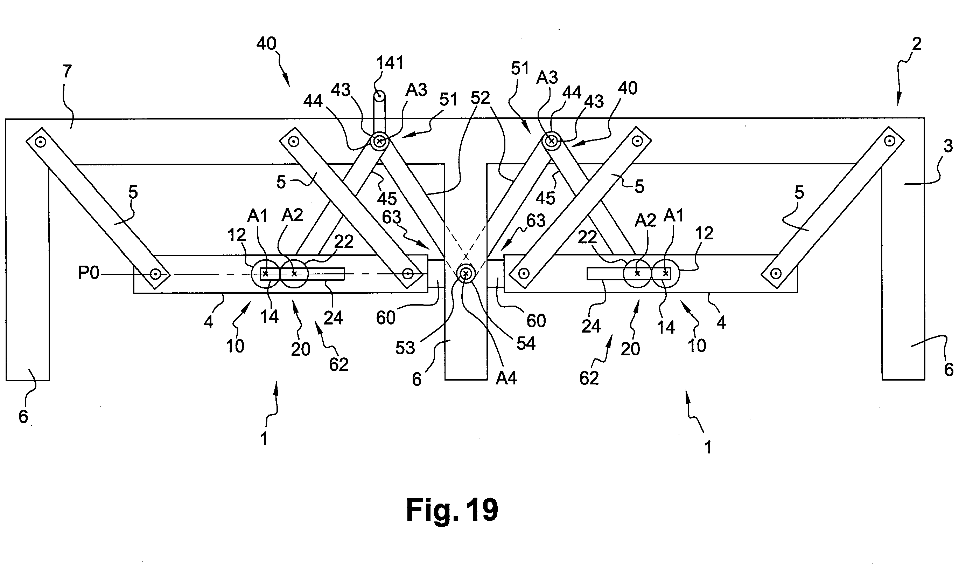

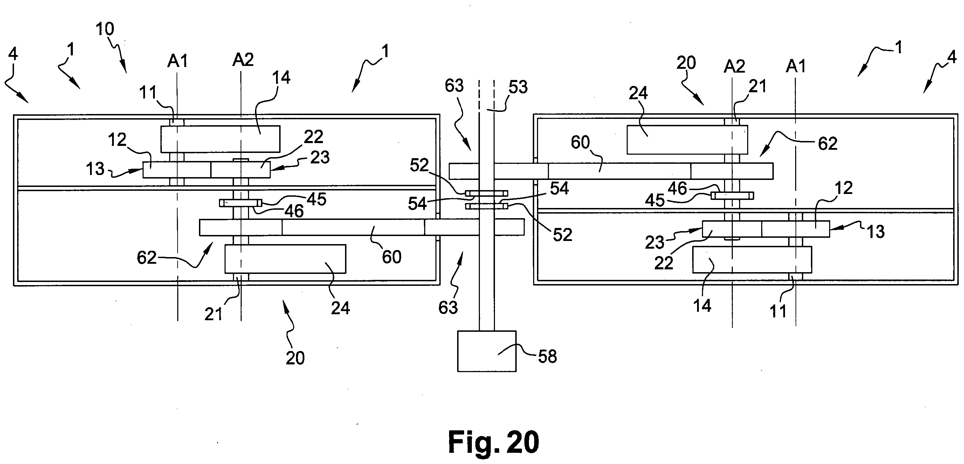

Les figures 19 et 20 illustrent un exemple de machine rotative conforme à l'invention, du type moteur à deux temps. Le moteur comprend deux mécanismes 1, chacun muni de son propre balancier 4. Les mécanismes 1 sont disposés en série, c'est-à-dire alignés dans le prolongement l'un de l'autre, dans le sens de déplacement des balanciers 4.

Le socle 3 est commun aux deux mécanismes 1. Autrement dit, le socle 3 supporte chacun des balanciers 4 suspendus en série. Le socle 3 comprend quatre pieds 6 latéraux et deux pieds 6 centraux. Les bielles de suspension 5 sont inclinées à 45 degrés, de sorte que les balanciers 4 soient rapprochés des pieds 6 centraux. Les éléments excentriques 14 et 24 sont des bras allongés.

Chaque mécanisme 1 comprend son propre arbre de transmission 43, ayant un axe aligné A3 avec les articulations supérieures des bielles 5. En revanche, une seule manivelle 141 est nécessaire pour le démarrage des mécanismes 1. En alternative, la manivelle 141 peut être remplacée par un moteur 41, ou bien la machine peut être dépourvue de moyens de démarrage des mécanismes 1.

La machine comprend un dispositif 50 intermédiaire entre les dispositifs 40 des deux mécanismes 1. Ce dispositif 50 peut être utilisé pour la transmission de mouvement entre les deux dispositifs 40, ainsi que pour la récupération d'énergie.

Sur l'exemple des figures 19 et 20, le dispositif 50 comprend deux roues dentées 51, deux chaines crantées 52, un arbre 53 et deux roues dentées 54. L'arbre 53 est supporté à ses extrémités par le socle 3, plus précisément par les deux pieds 6 centraux du socle 3. L'arbre 53 est mobile en rotation autour d'un axe A4, qui est disposé horizontalement, parallèle aux axes A1, A2 et A3. Les roues 51 sont montées solidaires en rotation des arbres 43 des deux mécanismes 1, tandis que les roues 54 sont montées solidaires en rotation de l'arbre 53. Les chaines 52 relient les roues 51 et les roues 54.

Chaque mécanisme 1 comporte une bielle de liaison 60 ayant une tête rotative 62 montée sur l'arbre 21 et une tête excentrique 63 montée sur l'arbre 53.

Lorsque la machine est en fonctionnement, les deux mécanismes 1 fonctionnent en opposition. Simultanément, les balanciers 4 exercent tantôt une force de poussée, tantôt une force de traction, sur l'arbre 53.

Le mouvement des mécanismes 1 permet de récupérer de l'énergie au niveau de l'arbre 53, par exemple en couplant cet arbre 53 à une génératrice 58. L'arbre 53 constitue alors un arbre de récupération d'énergie.

L'inclinaison des bielles 5 permet de modifier le centre de gravité des mécanismes 1, en comparaison avec des bielles 5 qui seraient disposées verticalement à l'équilibre. L'énergie de poussée ou de traction des balanciers 4 est très supérieure à la force initiale d'entraînement en rotation des éléments excentriques 14 et 24. Une fois les mécanismes 1 en mouvement, l'énergie centrifuge générée par les éléments excentriques 14 et 24 est très supérieure à l'énergie de poussée ou traction des balanciers 4.

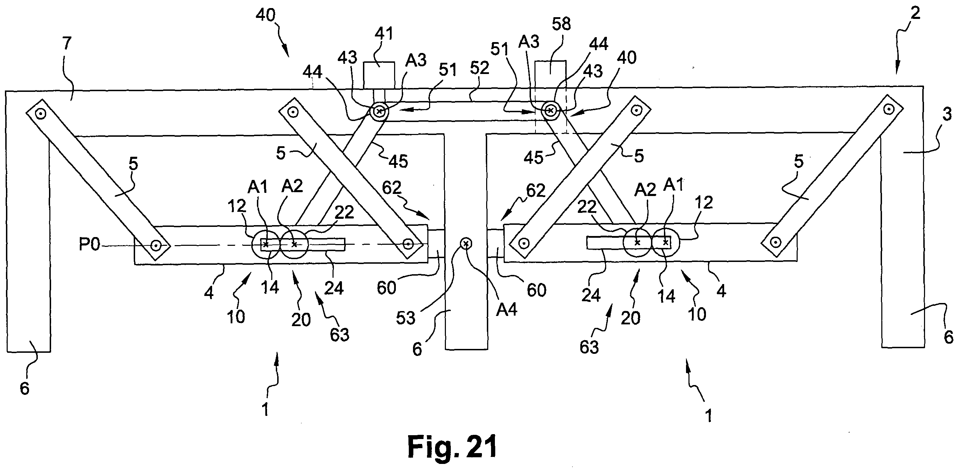

La figure 21 illustre un deuxième exemple de machine conforme à l'invention, correspondant à une variante des figures 19 et 20.

Le dispositif 50 comprend deux roues dentées 51 et une chaine crantée 52. Les roues 51 sont montées solidaires en rotation des arbres 43, tandis que la chaines 52 relient les roues 51 des deux mécanismes 1.

L'arbre 53 est fixé aux pieds 6 centraux et n'appartient pas au dispositif 50.

Chaque mécanisme 1 comporte une bielle de liaison 60 ayant une tête rotative 62 montée sur l'arbre 53 et une tête excentrique 63 montée sur l'arbre 21.

Le mouvement des mécanismes 1 permet de récupérer de l'énergie au niveau des arbres 43. Sur l'exemple de la figure 21, l'arbre 43 du mécanisme 1 de droite est couplé à une génératrice 58. En alternative, le moteur 41 peut être configuré comme un moteur-générateur, conçu pour fournir de l'énergie au démarrage de la machine, puis récupérer de l'énergie lorsque la machine est en fonctionnement.

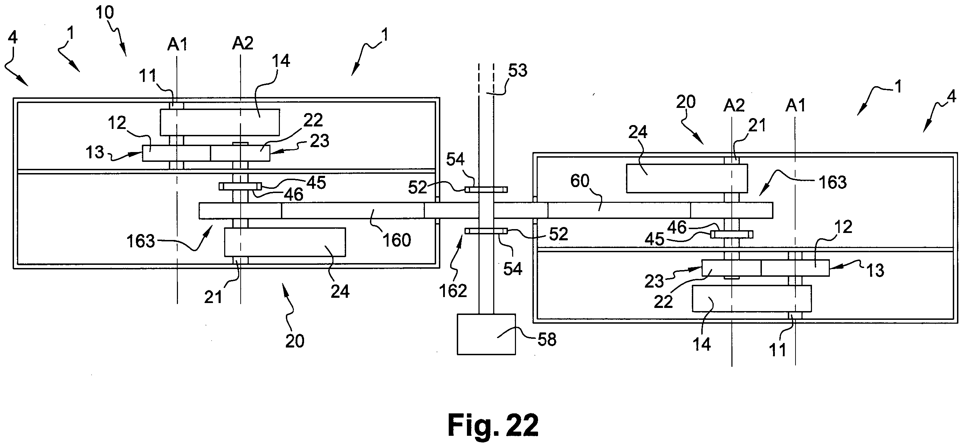

La figure 22 illustre un troisième exemple de machine conforme à l'invention, correspondant également à une variante des figures 19 et 20.

La machine comprend une bielle de liaison 160 commune aux deux mécanismes 1. Cette bielle 160 comprend une tête rotative 62 centrale montée en liaison pivot sur l'arbre 53, et deux têtes excentriques 63 d'extrémités montées en liaison pivot excentrique sur les arbres 21 des deux mécanismes 1.

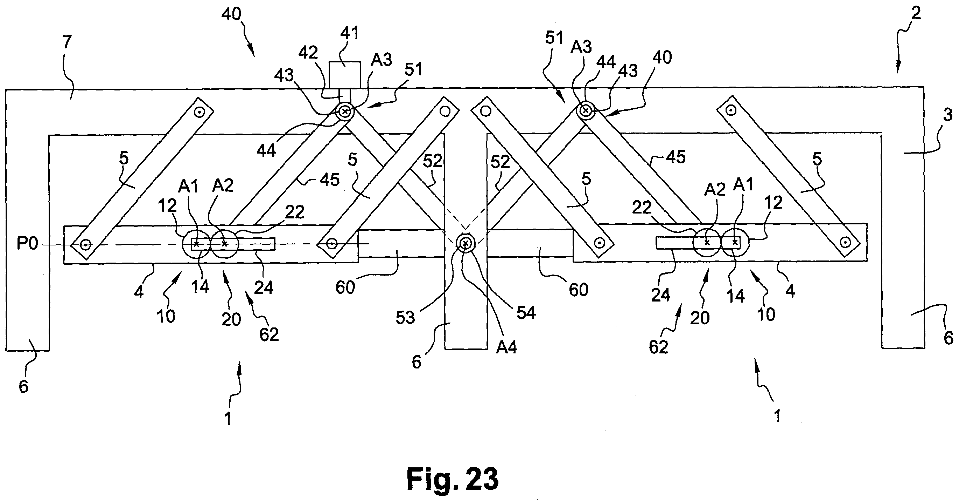

La figure 23 illustre un quatrième exemple de machine conforme à l'invention, correspondant également à une variante des figures 19 et 20.

Les bielles de suspension 5 sont inclinées à 45 degrés, de sorte que les balanciers 4 soient éloignés des pieds 6 centraux. Par conséquent, les chaines 45 et 52 ainsi que les bielles 60 sont plus allongées. L'arbre 53 constitue un arbre de récupération d'énergie.

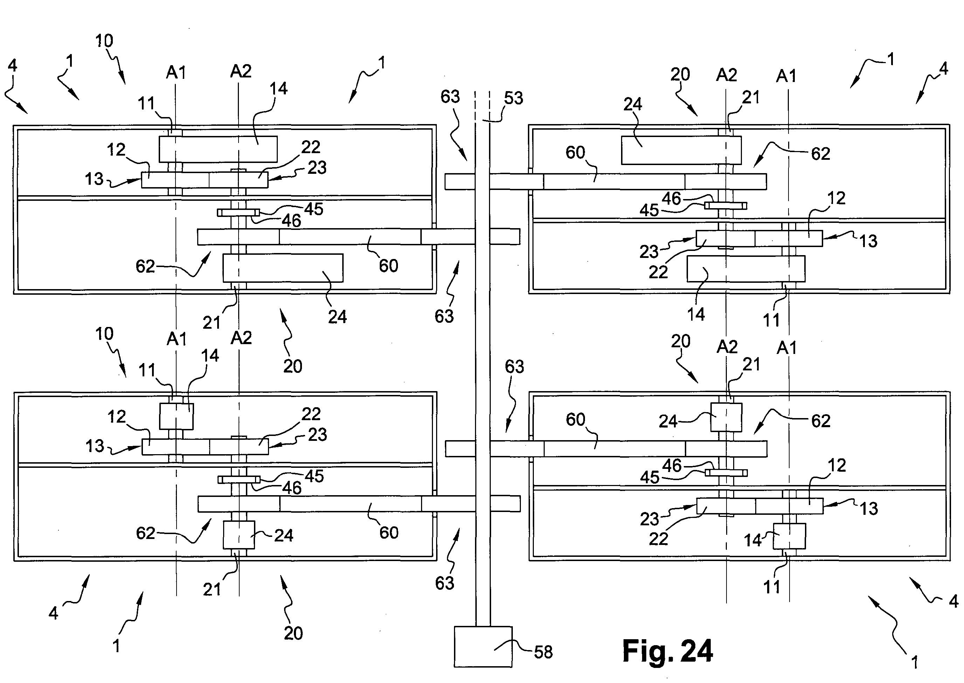

La figure 24 illustre un cinquième exemple de machine rotative conforme à l'invention, du type moteur à quatre temps. Le moteur comprend quatre mécanismes 1 selon l'invention, chacun muni de son propre balancier 4.

Le moteur comprend deux paires de mécanismes 1. Au sein de chaque paire, les mécanismes 1 sont disposés en série et synchronisés. Les paires sont disposées en parallèle et synchronisées entre elles.

Le socle 3, non représenté dans un but de simplification, est commun à tous les mécanismes 1.

Le moteur comprend deux arbres de transmission, non représentés dans un but de simplification. Un arbre de transmission est couplé aux mécanismes disposés en parallèle du côté gauche, et l'autre arbre de transmission est couplé aux mécanismes disposés en parallèle du côté droit.

Avantageusement, la machine comprend un unique arbre 53 de récupération d'énergie.

En pratique, les quatre bras 14 sont disposés en décalage d'un quart de tour les uns par rapport aux autres. De même, les quatre bras 24 sont disposés en décalage d'un quart de tour les uns par rapport aux autres. Ainsi, le moteur a toujours le même nombre de bras 14 ou 24 du côté gauche ou du côté droit, ce qui améliore son rendement. Chaque temps correspond à une rotation d'un quart de tour (90°) des mécanismes 1.

Lorsque deux mécanismes 1 présentent des moments M1 et M2 nuls, les deux autres mécanismes 1 sont en positions de centrifugation maximale, respectivement du côté gauche et du côté droit. L'énergie générée est maximale dans ces positions de centrifugation maximale. Comme les quatre mécanismes 1 ne présentent jamais des moments M1 et M2 nuls en même temps, le moteur n'a pas de point mort. Avantageusement, chaque position de centrifugation maximale correspond à une combustion de gaz dans le moteur.

Selon une variante non représentée, la machine tournante comprend huit mécanismes 1, réparties selon quatre paires de mécanismes 1 en série, les paires étant disposées en parallèle. Au cours d'un tour, la machine produit une poussée chaque huitième de tour (45°) des mécanismes 1.

D'autres variantes peuvent être mises en oeuvre sans sortir du cadre de l'invention. Les dimensions des éléments constitutifs de la machine, par exemple le socle 3 et l'arbre de transmission 43, varient en fonction du nombre de mécanismes 1.

Pour obtenir les meilleurs résultats et rendement, il est important que chaque balancier 4 soit positionné dans un plan rigoureusement horizontal. Il en est de même pour les axes A1 et A2 des roues dentées 12 et 22, qui doivent être situés dans un plan P0 rigoureusement horizontal ou vertical, selon la configuration du mécanisme 1.

Sur les figures 1 à 24, certains déplacements et distances sont exagérés dans un but de simplification.

En pratique, le mécanisme 1 et la machine peuvent être conformés différemment des figures 1 à 24 sans sortir du cadre de l'invention.

## Revendications

1. Mécanisme (1), comprenant :
- un support (2) incluant un socle (3), un balancier (4) suspendu au socle (3), et des bielles de suspension (5) articulées sur le socle (3) et sur le balancier (4) ;
- une première roue dentée (12) mobile en rotation (R1) par rapport au support (2) autour d'un premier axe (A1) ;
- une seconde roue dentée (22) mobile en rotation (R2) par rapport au support (2) autour d'un second axe (A2) ;
- un premier élément excentrique (14) solidaire en rotation (R1) de la première roue dentée (12) et générant un premier moment (M1) de force de pesanteur (P1) autour du premier axe (A1) ;
- un second élément excentrique (24) solidaire en rotation (R2) de la seconde roue dentée (22) et générant un second moment (M2) de force de pesanteur (P2) autour du second axe (A2) ; et
- une bielle de liaison (60 ; 160) comportant une tête rotative (62) montée en liaison pivot sur un premier arbre et une tête excentrique (63) montée en liaison pivot excentrique sur un second arbre ;
dans lequel :
- les axes (A1 ; A2) sont parallèles dans un plan de référence (P0) horizontal ou vertical ; et
- le balancier (4) supporte les axes (A1 ; A2) des roues dentées (12 ; 22) et des éléments excentriques (14 ; 24) ;
- les bielles de suspension (5) sont inclinées selon un angle compris entre 45 degrés et 80 degrés par rapport à un plan vertical ;
- pour la bielle de liaison (60 ; 160), le premier arbre est soit un arbre (11 ; 21) supportant l'une des roues dentées (12 ; 22), soit un arbre (53) fixé au socle (3), tandis que le second arbre est l'autre arbre parmi l'arbre (11 ; 21) supportant l'une des roues dentées (12 ; 22) et l'arbre (53) fixé au socle (3) ;
- les roues dentées (12 ; 22) engrènent l'une avec l'autre avec un rapport de transmission unitaire et sont mobiles en rotation (R1 ; R2) dans des sens contraires ;
- lorsque le mécanisme (1) est en fonctionnement, les éléments excentriques (14 ; 24) décrivent un mouvement elliptique, tandis que le balancier (4) décrit un mouvement de débattement ayant une composante verticale et une composante horizontale ;
- les moments (M1 ; M2) de force de pesanteur (P1 ; P2) des éléments excentriques (14 ; 24) ont une même valeur et un même sens, variables selon leur position angulaire autour des axes (A1 ; A2) ;
- pour chaque position angulaire des roues dentées (12 ; 22) et des éléments excentriques (14 ; 24) autour des axes (A1 ; A2), le mécanisme (1) présente une configuration d'équilibre au repos.

2. Mécanisme (1) selon la revendication 1, **caractérisé en ce que** les bielles de suspension (5) sont inclinées selon un angle de 45 degrés par rapport à un plan vertical.

3. Mécanisme (1) selon l'une des revendications précédentes, **caractérisé en ce que** les éléments excentriques (14 ; 24) ont une même masse et des mêmes dimensions.

4. Mécanisme (1) selon l'une des revendications précédentes, **caractérisé en ce que** les éléments excentriques (14 ; 24) ont une forme cylindrique.

5. Mécanisme (1) selon l'une des revendications précédentes, **caractérisé en ce que** les roues dentées (12 ; 22) comprennent une première roue (12) ayant une dent (13a) plus longue que les autres dents (13) et une deuxième roue (22) ayant une rainure (23a) formée entre deux dents (23), et **en ce que** la dent (13a) plus longue et la rainure (23a) coïncident lors de l'engrènement des roues dentées (12 ; 22), pour permettre l'alignement des éléments excentriques (14, 24).

6. Mécanisme (1) selon l'une des revendications précédentes, **caractérisé en ce qu'**il comprend un arbre de transmission (43) ayant un axe aligné avec les articulations supérieures des bielles de suspension (5).

7. Mécanisme (1) selon la revendication 6, **caractérisé en ce qu'**on définit une première distance entre l'extrémité distale de chaque élément excentrique (14 ; 24) et l'axe de rotation (A1 ; A2) correspondant, **en ce qu'**on définit une deuxième distance égale à l'entraxe des bielles de suspension (5) reliant le balancier (4) au socle (3), et **en ce que** la première distance est inférieure à la deuxième distance, de sorte que les éléments excentriques (14 ; 24) passent sous l'arbre de transmission (43).

8. Mécanisme (1) selon l'une des revendications précédentes, **caractérisé en ce qu'**il comprend des moyens de démarrage (40), incluant par exemple une chaine ou un système d'engrenages, conçus pour entrainer en rotation (R1 ; R2) l'une des roues dentées (12 ; 22).

9. Mécanisme (1) selon la revendication 8, **caractérisé en ce que** les moyens de démarrage (40) comprennent un moteur (41).

10. Mécanisme (1) selon la revendication 8, **caractérisé en ce que** les moyens de démarrage (40) comprennent une manivelle (141).

11. Mécanisme (1) selon l'une des revendications 1 à 7, **caractérisé en ce qu'**il est dépourvu de moyens de démarrage dédiés du ou des mécanismes (1), et **en ce que** le démarrage du ou des mécanismes (1) peut être réalisé par simple poussée sur le ou les balanciers (4) ou sur l'un des éléments excentriques (14 ; 24).

12. Mécanisme (1) selon l'une des revendications précédentes, **caractérisé en ce qu'**il comprend des moyens (58 ; 41) de récupération d'énergie en fonctionnement, par exemple sous forme d'une génératrice (58) ou d'un moteur-générateur (41).

13. Mécanisme (1) selon l'une des revendications 1 à 12, **caractérisé en ce que** les axes (A1 ; A2) des roues dentées (12 ; 22) sont horizontaux, et le plan de référence (P0) est horizontal.

14. Mécanisme (1) selon l'une des revendications 1 à 12, **caractérisé en ce que** les axes (A1 ; A2) des roues dentées (12 ; 22) sont horizontaux, et le plan de référence (P0) est vertical.

15. Machine tournante, **caractérisée en ce que** la machine comprend au moins un mécanisme (1) selon l'une des revendications 1 à 14.

16. Machine tournante selon la revendication 15, **caractérisée en ce que** la machine est un moteur à combustion interne, et **en ce que** les éléments excentriques (14 ; 24) équipant le mécanisme (1) se rencontrent en deux positions de centrifugation maximale, correspondant chacune à une combustion de gaz dans le moteur.

17. Machine tournante selon l'une des revendications 15 et 16, **caractérisée en ce que** la machine comprend au moins une paire de mécanismes (1) disposés en série et synchronisés.

18. Machine tournante selon l'une des revendications 15 à 17, **caractérisée en ce que** la machine comprend plusieurs paires de mécanismes (1), disposés en série et synchronisés au sein de chaque paire, les paires étant disposées en parallèle et synchronisées entre elles.

19. Machine tournante selon l'une des revendications 15 à 17, **caractérisée en ce que** la machine est un moteur à deux temps comprenant deux mécanismes (1), **en ce que** les deux premiers éléments excentriques (14) sont disposés en décalage d'un demi-tour, et **en ce que** les deux seconds éléments excentriques (24) sont disposés en décalage d'un demi-tour.

20. Machine tournante selon l'une des revendications 15 à 18, **caractérisée en ce que** la machine est un moteur à quatre temps comprenant quatre mécanismes (1), **en ce que** les quatre premiers éléments excentriques (14) sont disposés en décalage par quarts de tour, et **en ce que** les quatre seconds éléments excentriques (24) sont disposés en décalage par quarts de tour.

21. Machine tournante selon l'une des revendications 15 à 20, **caractérisée en ce que** le socle (3) est commun à tous les balanciers (4).

22. Procédé de mise en oeuvre d'un mécanisme (1) selon l'une des revendications 1 à 14, **caractérisé en ce qu'**il comprend les étapes successives suivantes :
- une étape de positionnement des éléments excentriques (14 ; 24) l'un par rapport à l'autre et par rapport aux roues dentées (12 ; 22), de sorte que les moments (M1 ; M2) de force de pesanteur (P1 ; P2) des éléments excentriques (14 ; 24) ont une même valeur et un même sens, variables selon leur position angulaire autour des axes (A1 ; A2), et que pour chaque position angulaire des roues dentées (12 ; 22) et des éléments excentriques (14 ; 24) autour des axes (A1 ; A2), le mécanisme (1) présente une configuration d'équilibre au repos ;
- une étape de démarrage de la rotation (R1 ; R2) des roues dentées (12 ; 22) et des éléments excentriques (14 ; 24) autour des axes (A1 ; A2), dans laquelle le mécanisme (1) quitte la configuration d'équilibre et se met en mouvement ; et
- une étape de fonctionnement, dans laquelle la rotation (R1 ; R2) des éléments excentriques (14 ; 24) autour des axes (A1 ; A2) génère des forces centrifuges au sein du mécanisme (1), les éléments excentriques (14 ; 24) décrivent un mouvement elliptique, tandis que le balancier (4) décrit un mouvement de débattement ayant une composante verticale et une composante horizontale.

## Patentansprüche

1. Mechanismus (1), umfassend:
- einen Träger (2), einschließlich eines Sockels (3), eines am Sockel (3) aufgehängten Auslegers (4) und am Sockel (3) sowie am Ausleger (4) angelenkter Aufhängungsstangen (5);
- ein erstes Zahnrad (12), das im Verhältnis zu dem Träger (2) um eine erste Achse (A1) herum drehbeweglich (R1) ist;
- ein zweites Zahnrad (22), das im Verhältnis zu dem Träger (2) um eine zweite Achse (A2) herum drehbeweglich (R2) ist;
- ein erstes exzentrisches Element (14), das drehfest (R1) mit dem ersten Zahnrad (12) verbunden ist und ein erstes Schwerkraft (P1)-Drehmoment (M1) um die erste Achse (A1) herum erzeugt;
- ein zweites exzentrisches Element (24), das drehfest (R2) mit dem zweiten Zahnrad (22) verbunden ist und ein zweites Schwerkraft (P2)-Drehmoment (M2) um die zweite Achse (A2) herum erzeugt; und
- eine Verbindungsstange (60; 160), umfassend einen rotierenden Kopf (62), der mittels einer Schwenkverbindung an einer ersten Welle angebracht ist, und einen exzentrischen Kopf (63), der mittels einer exzentrischen Schwenkverbindung an einer zweiten Welle angebracht ist;
wobei:
- die Achsen (A1; A2) auf einer horizontalen oder vertikalen Bezugsebene (P0) parallel sind; und
- der Ausleger (4) die Achsen (A1; A2) der Zahnräder (12; 22) und der exzentrischen Elemente (14; 24) trägt;
- die Aufhängungsstangen (5) in einem Winkel zwischen 45 Grad und 80 Grad im Verhältnis zu einer vertikalen Ebene geneigt sind;
- bei der Verbindungsstange (60; 160) die erste Welle entweder eine Welle (11; 21) ist, die eines der Zahnräder (12; 22) trägt, oder eine Welle (53), die am Sockel (3) befestigt ist, während es sich bei der zweiten Welle um die andere Welle von der Welle (11; 21), die eines der Zahnräder (12; 22) trägt, und der am Sockel (3) befestigten Welle (53) handelt;
- die Zahnräder (12; 22) mit einem einheitlichen Übersetzungsverhältnis ineinandergreifen und in entgegengesetzten Richtungen drehbeweglich (R1; R2) sind;
- wenn der Mechanismus (1) in Betrieb ist, die exzentrischen Elemente (14; 24) eine elliptische Bewegung beschreiben, während der Ausleger (4) eine Federwegbewegung mit einer vertikalen Komponente und einer horizontalen Komponente beschreibt;
- die Schwerkraft (P1; P2)-Drehmomente (M1; M2) der exzentrischen Elemente (14; 24) den gleichen Wert und die gleiche Richtung aufweisen, die je nach ihrer Winkelposition um die Achsen (A1; A2) herum veränderlich sind;
- der Mechanismus (1) für jede Winkelposition der Zahnräder (12; 22) und der exzentrischen Elemente (14; 24) um die Achsen (A1; A2) herum eine Gleichgewichtskonfiguration im Ruhezustand aufweist.

2. Mechanismus (1) gemäß Anspruch 1, **dadurch gekennzeichnet, dass** die Aufhängungsstangen (5) in einem Winkel von 45 Grad im Verhältnis zu einer vertikalen Ebene geneigt sind.

3. Mechanismus (1) gemäß einem der vorhergehenden Ansprüche, **dadurch gekennzeichnet, dass** die exzentrischen Elemente (14; 24) die gleiche Masse und gleiche Abmessungen haben.

4. Mechanismus (1) gemäß einem der vorhergehenden Ansprüche, **dadurch gekennzeichnet, dass** die exzentrischen Elemente (14; 24) eine zylindrische Form aufweisen.

5. Mechanismus (1) gemäß einem der vorhergehenden Ansprüche, **dadurch gekennzeichnet, dass** die Zahnräder (12; 22) ein erstes Rad (12) mit einem Zahn (13a), der länger als die anderen Zähne (13) ist, und ein zweites Rad (22) mit einer Nut (23a), die zwischen zwei Zähnen (23) ausgebildet ist, umfassen und dass der längere Zahn (13a) und die Nut (23a) beim Ineinandergreifen der Zahnräder (12; 22) übereinstimmen, um das Aufeinanderausrichten der exzentrischen Elemente (14; 24) zu ermöglichen.

6. Mechanismus (1) gemäß einem der vorhergehenden Ansprüche, **dadurch gekennzeichnet, dass** er eine Antriebswelle (43) mit einer Achse umfasst, welche auf die oberen Gelenke der Aufhängungsstangen (5) ausgerichtet ist.

7. Mechanismus (1) gemäß Anspruch 6, **dadurch gekennzeichnet, dass** ein erster Abstand zwischen dem distalen Ende jedes exzentrischen Elements (14; 24) und der dazugehörigen Drehachse (A1; A2) festgelegt ist, dass ein zweiter Abstand festgelegt ist, der gleich dem Achsabstand der den Ausleger (4) mit dem Sockel (3) verbindenden Aufhängungsstangen (5) ist, und dass der erste Abstand geringer als der zweite Abstand ist, so dass die exzentrischen Elemente (14; 24) unter der Antriebswelle (43) hindurchgehen.

8. Mechanismus (1) gemäß einem der vorhergehenden Ansprüche, **dadurch gekennzeichnet, dass** er Mittel zum Starten (40) umfasst, die beispielsweise eine Getriebekette oder ein Getriebesystem einschließen, die dazu ausgelegt sind, eines der Zahnräder (12; 22) in Drehung (R1; R2) zu versetzen.

9. Mechanismus (1) gemäß Anspruch 8, **dadurch gekennzeichnet, dass** die Mittel zum Starten (40) einen Motor (41) umfassen.

10. Mechanismus (1) gemäß Anspruch 8, **dadurch gekennzeichnet, dass** die Mittel zum Starten (40) eine Kurbel (141) umfassen.

11. Mechanismus (1) gemäß einem der Ansprüche 1 bis 7, **dadurch gekennzeichnet, dass** ihm spezielle Mittel zum Starten des oder der Mechanismen (1) fehlen und dass das Starten des oder der Mechanismen (1) durch einen einfachen Stoß an dem oder den Auslegern (4) oder an einem der exzentrischen Elemente (14; 24) erfolgen kann.

12. Mechanismus (1) gemäß einem der vorhergehenden Ansprüche, **dadurch gekennzeichnet, dass** er Mittel (58; 41) zum Rückgewinnen von Energie während des Betriebs beispielsweise in Form eines Generators (58) oder eines Motorgenerators (41) umfasst.

13. Mechanismus (1) gemäß einem der Ansprüche 1 bis 12, **dadurch gekennzeichnet, dass** die Achsen (A1; A2) der Zahnräder (12; 22) horizontal sind und die Bezugsebene (P0) horizontal ist.

14. Mechanismus (1) gemäß einem der Ansprüche 1 bis 12, **dadurch gekennzeichnet, dass** die Achsen (A1; A2) der Zahnräder (12; 22) horizontal sind und die Bezugsebene (P0) vertikal ist.

15. Rotierende Maschine, **dadurch gekennzeichnet, dass** die Maschine mindestens einen Mechanismus (1) gemäß einem der Ansprüche 1 bis 14 umfasst.

16. Rotierende Maschine gemäß Anspruch 15, **dadurch gekennzeichnet, dass** die Maschine ein Verbrennungsmotor ist und dass die exzentrischen Elemente (14; 24), mit denen der Mechanismus (1) ausgestattet ist, in zwei Positionen einer maximalen Zentrifugation aufeinandertreffen, wobei jede einer Gasverbrennung im Motor entspricht.

17. Rotierende Maschine gemäß einem der Ansprüche 15 und 16, **dadurch gekennzeichnet, dass** die Maschine mindestens ein Paar von Mechanismen (1) umfasst, die in Serie und synchronisiert angeordnet sind.

18. Rotierende Maschine gemäß einem der Ansprüche 15 bis 17, **dadurch gekennzeichnet, dass** die Maschine mehrere Paare von Mechanismen (1) umfasst, die in Serie und synchronisiert innerhalb jedes Paars angeordnet sind, wobei die Paare parallel und zueinander synchronisiert angeordnet sind.

19. Rotierende Maschine gemäß einem der Ansprüche 15 bis 17, **dadurch gekennzeichnet, dass** die Maschine ein Zweitaktmotor ist, der zwei Mechanismen (1) umfasst, dass die beiden ersten exzentrischen Elemente (14) um eine halbe Umdrehung versetzt angeordnet sind und dass die beiden zweiten exzentrischen Elemente (24) um eine halbe Umdrehung versetzt angeordnet sind.

20. Rotierende Maschine gemäß einem der Ansprüche 15 bis 18, **dadurch gekennzeichnet, dass** die Maschine ein Viertaktmotor ist, der vier Mechanismen (1) umfasst, dass die vier ersten exzentrischen Elemente (14) um eine Viertelumdrehung versetzt angeordnet sind und dass die vier zweiten exzentrischen Elemente (24) um eine Viertelumdrehung versetzt angeordnet sind.

21. Rotierende Maschine gemäß einem der Ansprüche 15 bis 20, **dadurch gekennzeichnet, dass** alle Ausleger (4) gemeinsam den Sockel (3) haben.

22. Verfahren zur Umsetzung eines Mechanismus (1) gemäß einem der Ansprüche 1 bis 14, **dadurch gekennzeichnet, dass** es die folgenden aufeinanderfolgenden Schritte umfasst:
- einen Schritt zum Positionieren der exzentrischen Elemente (14; 24) im Verhältnis zueinander und im Verhältnis zu den Zahnrädern (12; 22), so dass die Schwerkraft (P1; P2)-Drehmomente (M1; M2) der exzentrischen Elemente (14; 24) den gleichen Wert und die gleiche Richtung aufweisen, die je nach ihrer Winkelposition um die Achsen (A1; A2) herum veränderlich sind, und dass der Mechanismus (1) für jede Winkelposition der Zahnräder (12; 22) und der exzentrischen Elemente (14; 24) um die Achsen (A1; A2) herum eine Gleichgewichtskonfiguration im Ruhezustand aufweist;
- einen Schritt zum Einleiten der Drehung (R1; R2) der Zahnräder (12; 22) und der exzentrischen Elemente (14; 24) um die Achsen (A1; A2) herum, bei dem der Mechanismus (1) die Gleichgewichtskonfiguration verlässt und sich in Bewegung setzt; und
- einen Betriebsschritt, bei dem die Drehung (R1; R2) der exzentrischen Elemente (14; 24) um die Achsen (A1; A2) herum Zentrifugalkräfte innerhalb des Mechanismus (1) erzeugt, wobei die exzentrischen Elemente (14; 24) eine elliptische Bewegung beschreiben, während der Ausleger (4) eine Federwegbewegung mit einer vertikalen Komponente und einer horizontalen Komponente beschreibt.

## Claims

1. Mechanism (1), comprising:
- a support (2) including a base (3), a pendulum (4) suspended on the base (3), and connecting suspension rods (5) articulated on the base (3) and on the pendulum (4);
- a first cog wheel (12) mobile in rotation (R1) in relation to the support (2) around a first axis (A1);
- a second mobile cog wheel (22) in rotation (R2) in relation to the support (2) around a second axis (A2);
- a first eccentric element (14) integral with the first cog wheel (12) in rotation (R1) and generating a first moment (M1) of gravity force (P1) around the first axis (A1);
- a second eccentric element (24) integral with the second cog wheel (22) in rotation (R2) and generating a second moment (M2) of gravity force (P2) around the second axis (A2); and
- a connecting rod (60; 160) comprising a rotary head (62) mounted as a pivot link on a first shaft and an eccentric head (63) mounted as an eccentric pivot link on a second shaft;
wherein:
- the axis (A1; A2) are parallel within a horizontal or vertical reference plane (P0); and
- the pendulum (4) supports the axis (A1; A2) of the cog wheels (12; 22) and of the eccentric elements (14; 24);
- the connecting suspension rods (5) are slanting in accordance with an angle comprised between 45 degrees and 80 degrees in relation to a vertical plane;
- for the connecting link rod (60; 160), the first shaft is either a shaft (11; 21) supporting one of the cog wheels (12; 22), or a shaft (53) fixed on the base (3), whereas the second shaft is the other shaft among the shaft (11; 21) supporting one of the cog wheels (12; 22) and the shaft (53) fixed on the base (3);
- the cog wheels (12; 22) engage one with the other using a unitary transmission ratio and are mobile in rotation (R1; R2) in opposing directions;
- when the mechanism (1) is in operation, the eccentric elements (14; 24) follow an elliptical movement, whereas the pendulum (4) follows a travel movement having a vertical component and a horizontal component;
- the moments (M1; M2) of gravity force (P1; P2) of the eccentric elements (14; 24) have a same value and a same direction, both being variable depending on their angular position around the axis (A1; A2);
- for each angular position of the cog wheels (12; 22) and of the eccentric elements (14; 24) around the axis (A1; A2), the mechanism (1) presents an equilibrium configuration at rest.

2. A mechanism (1) according to claim 1, **characterised in that** the connecting suspension rods (5) are slanted according to an angle of 45 degrees in relation to a vertical plan.

3. A mechanism (1) according to one of the previous claims, **characterised in that** the eccentric elements (14; 24) have a same mass and same dimensions.

4. A mechanism (1) according to one of the previous claims, **characterised in that** the eccentric elements (14; 24) are of cylindrical shape.

5. A mechanism (1) according to one of the previous claims, **characterised in that** the cog wheels (12; 22) comprise a first wheel (12) having a cog (13a) longer than the other cogs (13) and a second wheel (22) having a groove (23a) formed between two cogs (23), and **in that** the longer cog (13a) and the groove (23a) coincide when the cog wheels (12; 22) engage, thereby enabling alignment of the eccentric elements (14, 24).

6. A mechanism (1) according to one of the previous claims, **characterised in that** it comprises a transmission shaft (43) having an axis aligned with the upper articulations of the connecting suspension rods (5).

7. A mechanism (1) according to claim 6, **characterised in that** a first distance is defined between the distal end of each eccentric element (14; 24) and the corresponding rotation axis (A1; A2), **in that** a second distance equal to the centre-to-centre distance of the connecting suspension rods (5) linking the pendulum (4) to the base (3), and **in that** the first distance is less than the second distance, in order for the eccentric elements (14; 24) to pass under the transmission shaft (43).

8. A mechanism (1) according to one of the previous claims, **characterised in that** it comprises start-up means (40), including for example a chain or a gearing system, designed to drive one of the cog wheels (12; 22) into rotation (R1; R2).

9. A mechanism (1) according to claim 8, **characterised in that** the start-up means (40) comprise a motor (41).

10. A mechanism (1) according to claim 8, **characterised in that** the start-up means (40) comprise a crank (141).

11. A mechanism (1) according to one of the claims 1 to 7, **characterised in that** it is void of dedicated start-up means for the mechanism or mechanisms (1), and that the start-up of the mechanism or mechanisms (1) is doable by a simple push on the pendulum or pendulums (4) or on one of the eccentric elements (14; 24).

12. A mechanism (1) according to one of the previous claims, **characterised in that** it comprises energy-collection means (58; 41) in operation, for example in the form of a generator (58) or of a motor-generator (41).

13. A mechanism (1) according to one of the claims 1 to 12, **characterised in that** the axis (A1; A2) of the cog wheels (12; 22) are horizontal, and the reference plane (P0) is horizontal.

14. A mechanism (1) according to one of the claims 1 to 12, **characterised in that** the axis (A1; A2) of the cog wheels (12; 22) are horizontal, and the reference plane (P0) is vertical.

15. A rotating machine, **characterised in that** the machine comprises at least one mechanism (1) according to one of the claims 1 to 14.

16. A rotating machine according to claim 15, **characterised in that** the machine is an internal combustion motor, and that the eccentric elements (14; 24) equipping the mechanism (1) join up in two maximal centrifugation positions, each one corresponding to a combustion of gas inside the motor.

17. A rotating machine according to one of the claims 15 and 16, **characterised in that** the machine comprises at least one pair of mechanisms (1) placed in series and synchronised.

18. A rotating machine according to one of the claims 15 to 17, **characterised in that** the machine comprises several pairs of mechanisms (1), placed in series and synchronised within each pair, the pairs being placed in parallel and synchronised among themselves.

19. A rotating machine according to one of the claims 15 to 17, **characterised in that** the machine is a two-stroke motor comprising two mechanisms (1), **in that** the first two eccentric elements (14) are placed at half-turn intervals, and **in that** the second two eccentric elements (24) are placed at half-turn intervals.

20. A rotating machine according to one of the claims 15 to 18, **characterised in that** the machine is a four-stroke motor comprising four mechanisms (1), **in that** the first four eccentric elements (14) are placed at quarter-turn intervals, and **in that** the second four eccentric elements (24) are placed at quarter-turn intervals.

21. A rotating machine according to one of the claims 15 to 20, **characterised in that** the base (3) is common to all the pendulums (4).

22. An implementation method of a mechanism (1) according to one of the claims 1 to 14, **characterised in that** it comprises the following successive steps:
- a positioning step of the eccentric elements (14; 24) one in relation to the other and in relation to the cog wheels (12; 22), in order that the moments (M1; M2) of gravity force (P1; P2) of the eccentric elements (14; 24) have a same value and a same direction, both being variable depending on their angular position around the axis (A1; A2), and that for each angular position of the cog wheels (12; 22) and of the eccentric elements (14; 24) around the axis (A1; A2), the mechanism (1) presents an equilibrium configuration at rest;
- a rotation (R1; R2) start-up step of the cog wheels (12; 22) and of the eccentric elements (14; 24) around the axis (A1; A2), wherein the mechanism (1) quits the equilibrium configuration and sets in motion; and
- an operating step, wherein the rotation (R1; R2) of the eccentric elements (14; 24) around the axis (A1; A2) generates centrifugal force within the mechanism (1), the eccentric elements (14; 24) following an elliptical movement, whereas the pendulum (4) follows a travel movement having a vertical component and a horizontal component.
